(19) Europäisches Patentamt
European Patent Office
Office européen des brevets

(11) **EP 3 391 386 B1**

(12) **EUROPEAN PATENT SPECIFICATION**

(45) Date of publication and mention
of the grant of the patent:
**25.09.2019 Bulletin 2019/39**

(21) Application number: **16805100.1**

(22) Date of filing: **01.12.2016**

(51) Int Cl.:
*H01B 3/44* *(2006.01)*        *H01B 11/00* *(2006.01)*
*C08K 5/092* *(2006.01)*        *C08L 23/04* *(2006.01)*

(86) International application number:
**PCT/EP2016/079366**

(87) International publication number:
**WO 2017/102341 (22.06.2017 Gazette 2017/25)**

(54) **CABLE COMPRISING A FOAMED LAYER COMPRISING A POLYOLEFIN POLYMER AND A BLOWING AGENT**

KABEL MIT EINER GESCHÄUMTEN SCHICHT MIT EINEM POLYOLEFIN UND TREIBMITTEL

CÂBLE COMPRENANT UNE COUCHE DE MOUSSE COMPRENANT UN POLYMÈRE DE POLYOLÉFINE ET UN AGENT GONFLANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2015 EP 15201209**

(43) Date of publication of application:
**24.10.2018 Bulletin 2018/43**

(73) Proprietor: **Borealis AG**
**1220 Vienna (AT)**

(72) Inventors:
• **HJÄRTFORS, Anna**
**44241 Kungälv (FI)**
• **WANNERSKOG, Asa**
**42170 Västra Frölunda (SE)**

• **ANKER, Martin**
**42543 Hisings Kärra (SE)**
• **WATSON, Ann**
**Arbroath DD11 3RH (GB)**
• **PRIETO, Oscar**
**41674 Göteborg (SE)**

(74) Representative: **Maiwald Patent- und
Rechtsanwaltsgesellschaft mbH
Elisenhof
Elisenstraße 3
80335 München (DE)**

(56) References cited:
**EP-A1- 1 942 134        EP-A1- 2 011 818
EP-B1- 1 258 013        WO-A1-2014/018768**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention**

The invention relates to a cable comprising at least one layer which comprises a foamable polyolefin polymer composition comprising a polyolefin polymer and blowing agent wherein the blowing agent comprises more than 90 wt% of citric acid or a derivate of citric acid.

**Background**

Communication cables are used to transmit signals of high frequency, either through electromagnetic waves or as light pulses as in fibre optical cables.
Electrical communication cables for telephone and data transmission are normally twisted pair cables which is a type of wiring in which two conductors of a single circuit are twisted together for the purpose of cancelling out electromagnetic interference from external sources. Assembly of the twisted pair cables involves passing the insulated conductor through machinery and this may cause abrasion or deformation. The twisting process is extremely delicate as back tension will greatly affect the tightness and hence separation of the conductors. Excess tension during subsequent sheathing and installation will equally affect conductor separation, in effect a crush phenomenon. The key parameters affecting crush performance are tensile strength and hardness which must be maximised in order to achieve optimum results.

Another type of electrical communication cable is the coaxial cable construction. Coaxial cables are used for transmission of radio, cable TV and data signals. Coaxial cables consist of two separate parallel conductors that are separated by an insulating dielectric.

The conductors in communication cables are metal and the insulation can be made from different materials, suitably polyolefins such as polyethylene. As the frequency of the transmitted signal increases, the relative permittivity of the insulation becomes more important. The relative permittivity is a material specific property, and it is lower for air than for polyolefins, such as polyethylene. By foaming the polyolefin composition insulation, gas is introduced and the relative permittivity decreases linearly with expansion degree. Relative permittivity is also commonly known as dielectric constant, and these terms are used interchangeably.

Foaming of polyolefin composition can be done either using chemical or physical blowing agents, or a combination of both. Chemical blowing agents are substances which release blowing gas through thermal decomposition reactions and the chemical blowing agent is consumed in the foaming reaction. Examples of such substances are hydrazine, hydrazide, or azodicarbonamide, or those based on combinations of solid organic acids (or a metal salt thereof) and alkali metal carbonate(s) or alkali metal bicarbonate (s), such as combination of citric acid/derivate of citric acid and sodium bicarbonate. Physical blowing agents are gasses which are injected directly into the polymer melt. In such processes it is common to use chemical blowing agents as cell nucleators as the gas formed by the blowing agent reaction serves as nucleating points with lower energy for bubble formation. The gas used as physical blowing agent can be for example $N_2$ or $CO_2$. Both chemical and physical foaming extrusion processes are used for extrusion of foamed communication cable insulation. In chemical foaming, all the blowing gas comes from decomposition of a chemical blowing agent. Chemical foaming can be used to reach expansion degrees up to 50 %, and it is the main process for producing telesingles for telephone cables and low transmission rate data cables. The typical foaming degrees for these applications are around 40 %. This type of foaming does not require expensive investments in gas injection equipment, but the process is very dependent on the melt temperature. If the temperature is too low, the desired expansion degree will not be reached. It is also important to consider other factors that influence the foaming process and cell structure such as die size and pressure, conductor preheating and cooling bath temperature and position.

During cellular extrusion of foamed telesingles, the expansion degree is normally calculated online by a process computer. The computer gets capacitance, line speed, telesingle outer diameter and temperature in a heating zone in the end of the extruder as online inputs. Density and dielectric constant of the solid polymer material and the diameter of conductor are fed in as input into the process computer The expansion degree can also be calculated offline based on equations 1 and 2 below:

$$C = \frac{2\pi\varepsilon_0\varepsilon_{foam}}{\ln\frac{D}{d}} \tag{1}$$

Where $C$ is the capacitance, $\varepsilon_0$ the relative permittivity in vacuum, $\varepsilon_{foam}$ the relative permittivity of the foamed insulation, $D$ is the outer diameter of the insulation and $d$ is the conductor diameter.

$$\varepsilon_{foam} = V_{gas}\varepsilon_{gas} + V_{polymer}\varepsilon_{polymer} \qquad\qquad (2)$$

Where $V_{gas}$ is the volume fraction of gas inside the foam, $\varepsilon_{gas}$ is the relative permittivity of the gas phase in the foam, $\varepsilon_{polymer}$ is the relative permittivity of the polymer composition and $V_{polymer}$ is the volume fraction of polymer composition in the insulation.

Equation 1 describes the capacitance of a cable, and equation 2 describes the relative permittivity of the foamed insulation by assuming a linear relationship between relative permittivity and the amount of gas inside the insulation. The calculated volume fraction of gas in the insulation, $V_{gas}$, is determined by combining equations 1 and 2 and substituting $V_{polymer}$ with (1 - $V_{gas}$). The calculated $V_{gas}$ is then multiplied with 100 in order to get percentage of foam expansion, also referred to as expansion degree.

For high transmission rate data cables and coaxial cables, the maximum expansion degrees possible to reach with chemical foaming is not high enough. These types of cables are instead produced using physical foaming where almost all or majority of blowing gas comes from gas injection directly into the extruder. The blowing gas can be either $N_2$ or $CO_2$. $N_2$ is normally used for communication cables, but with $CO_2$ it is possible to reach even higher foaming degrees, typically up to 85 %. The degree of foaming varies a lot depending on cable type and construction. A nucleating agent, nucleator or kicker, is normally used in physical foaming processes. The nucleating agent provides points in the insulation where the energy needed for bubble formation is lower. These nucleating agents can be either passive or active. An active nucleating agent is a substance that decomposes into gaseous products i.e. a chemical blowing agent, while passive nucleating agents are particles that only provide local points of lower energy where bubble formation is more likely to happen.

In many foamed polymer applications, the blowing agent masterbatch is added to the polymer composition either by direct feeding into the extruder or by dry mixing the blowing agent masterbatch with the polymer composition prior to the extrusion process. Depending on type and length of the extruder, this can result in poor mixing of blowing agent masterbatch and polymer composition. Other factors that influence are differences in rheology between polymer composition and blowing agent masterbatch, extrusion speed and extrusion temperature. In cable extrusion processes, the extruders are typically not designed for mixing polymer compositions and communication cables are normally extruded at high line speeds in order to have a good productivity. Poor mixing of blowing agent masterbatch and polymer composition results in a poor cell structure as the gas and solid nucleators are not evenly distributed in the polymer composition leading to uneven bubble nucleation and growth as well as larger areas of solid material without any cells.

The distribution of blowing agent in the polymer composition is improved by melt mixing the blowing agent masterbatch into the polymer composition by compounding prior to the extrusion process. This results in improved cell structure as the gas and solid particles acting as bubble nucleation sites are better distributed in the polyolefin polymer melt.

For communication cables it is critical to have a good cell structure within the foamed insulation in order to have isotropic electrical properties. It is desired to have a cell structure with many small cells evenly distributed within the insulation. The cell structure is also important for mechanical properties. Having many small cells that are well distributed will give better crush resistance compared to a structure with larger cells that are not homogeneously distributed as this will give weak parts in the insulation.

The main blowing agent used in the cable industry is azodicarbonamide (ADCA) which has a decomposition temperature range fitting well into the processing window of polyolefins, such as polyethylene, and gives fine foam structure, which a key requirement for cable applications. Due to inclusion of ADCA on the REACH (Registration, Evaluation, Authorisation and Restriction of Chemicals) candidate list and the risk of future inclusion on authorisation list, there are a lot of efforts put into finding an alternative solution. The reason for ADCA being identified as a SVHC (substance of very high concern) and included in the candidate list is that it has been identified as a respiratory sensitiser with known cases of asthma in workers exposed to ADCA in powder form.

Another issue with azodicarbonamide is that ammonia is released from the blowing agent decomposition reactions. This is disturbing the working environment for cable manufacturers as it gives a bad smell.

Alternatives to ADCA which are compatible with the processing window of polyethylene are the endothermic blowing agents. Endothermic blowing agents are conventionally combinations of sodium bicarbonate and citric acid or a derivative of citric acid. These blowing agents are normally added directly to the extruder hopper, or dry mixed with polyolefins prior to extrusion. In high speed extrusion processes like cable extrusion, this way of adding the blowing agent does not provide sufficient homogenisation of the blowing agent in the polymer melt and this results in a foamed insulation with poor cell structure and bad surface.

The main problem with endothermic blowing agents for cable applications is that sodium bicarbonate starts to decompose below 100°C, with a reaction rate maximum between 130 and 140°C, which generally considered as being too close to the melting temperature of high density polyethylene to allow compounding without complete decomposition of the sodium bicarbonate blowing agent. One object of the invention is increasing the process window, i.e. allow higher compounding temperatures.

The blowing agent sodium bicarbonate gradually decomposes into sodium carbonate, water and carbon dioxide. The decomposition reaction is endothermic and heat is required in order for it to occur. The reaction start to occur already at temperatures below 100°C, but the reaction rate is very low at those temperatures. The reaction increases rapidly as temperature increases with a reaction rate maximum between 130°C and 140°C Hartman et al., Ind. Eng. Chem. Res. 2013, 52, 10619-10626. High density polyethylene typically have melting temperatures around 130°C, and it is generally believed that compounding of sodium bicarbonate into high density polyethylene is not possible as the melting point of the polymer is very close to the maximum decomposition rate of the sodium bicarbonate blowing agent.

WO 2014018768 is providing additive compositions for polymer base materials with particular use in applications where high dielectric constants, low loss factors and low densities are preferred, such as in applications involving wire and cable dielectric materials. The disclosed additive compositions consist of thermoplastic polymer carrier, chemical blowing agent and filler.

One object of the invention is to make a cable comprising at least one layer which comprises a foamable polyolefin polymer composition, comprising a blowing agent which is free from hydrazine, hydrazide, or azodicarbonamide.

Another object of the invention is to avoid exothermic blowing agent decomposition where the heat released from the decomposition reaction starts a chain reaction causing the blowing agent to react uncontrolled during any extrusion process such as compounding. Endothermic blowing agents are easier to control as constant supply of heat is needed for the reaction to continue. This also enables better control of gas release from the blowing agent, especially during continuous processes such as extrusion.

Still another object of the invention is to increase the decomposition temperature of the blowing agent in the foamable polyolefin polymer composition, thus avoid any compounds that comprise sodium bicarbonate.

A further object of the invention is to replace hydrazine, hydrazide, or azodicarbonamide, while maintaining same cell structure (small and uniform distribution of cells), while maintaining line speed, while maintaining processability, and with same output from cable extruder. Another object of the invention is the ability to use conventional cable extruders, i.e. no replacement of equipment and no modification of present equipment required compared to conventional hydrazine, hydrazide, or azodicarbonamide compounds, such as azodicarbonamide (ADCA). The extrusion temperature of the invention is typically higher, but still within the process window of conventional cable extruders. Another object of the invention is to increase the process window, meaning less risk for degradation in compounding, thus better consistence and better quality. Using the invention means that difference between the decomposition temperature of the blowing agent and the melting point of the foamable polyolefin polymer composition is increased.

The higher decomposition temperature allows better dispersion of blowing agent, nucleating agents and other additives such as antioxidants in the foamable polyolefin polymer composition by allowing higher energy input into the polyolefin polymer composition during mixing without risk of losing the blowing agent by kicking off the decomposition reactions during the mixing process.

It is an object of the invention to design a blend that results in homogenous foam that can be extruded at high speed on any cable extruder with good cell structure in the foamed layer in a cable. Another advantage of citric acid or a derivate of citric acid is that during decomposition they release $CO_2$ as the main blowing gas. $CO_2$ has better solubility in the polyolefin polymer composition, compared to $N_2$ that is released from hydrazine, hydrazide, or azodicarbonamide.

Another object of the invention is a good distribution of bubble nucleation sites in the foamable polyolefin polymer composition.

**Brief Summary of invention**

The invention is a cable comprising at least one layer which comprises a foamable polyolefin polymer composition comprising a

    a. a polyolefin polymer
    b. a blowing agent

wherein the blowing agent comprises more than 90 wt% of citric acid or a derivate of citric acid.

The definition of polyolefin is a polymer with more than 50 wt% of olefins, such as $\alpha$-olefins with 1 to 12 carbon atoms, typically ethylene or propylene monomer. Polyolefin polymer composition means that the composition comprises at least 90 wt% of polyolefins.

The cable has at least one layer and one conductor, which can conduct a signal. Typical conductors are metal conductors.

Examples of citric acid or a derivate of citric acid are citric acid, alkali metal salts of citric acid, such as mono-, di- or trisodium citrate and mono-, di- or tripotassium citrate and esters of citric acid, such as triethyl citrate.

Citric acid and derivatives of citric acid decomposes into water, carbon dioxide and solid decomposition products. The decomposition reactions are endothermic meaning that a continuous supply of heat energy is required in order for it to occur. The temperature at which the decomposition reactions occur at a fast rate depends on the chemical substance (citric acid or a citric acid derivate), but is typically around 200°C. The decomposition temperatures of citric acid and derivatives of citric acid are well above the melting points of polyolefin polymers and can thus be compounded into the polyolefin polymer prior to cable extrusion without pre-decomposition in the mixing step.

Foamable means that it is possible to produce at least one layer in a cable from the composition that is foamed in for example an extrusion process. The composition contains the components needed for the foaming and it is not necessary to add anything before the processing step in which the foamed article is produced. However, it is possible to inject gas into the extruder in order to reach higher expansion degrees than with pure chemical foaming where all gas comes from the decomposition reactions of the blowing agent(s).

Blowing agent is a substance which is capable of producing a cellular structure via a foaming process in the foamable polyolefin composition. They are typically applied when the polyolefin polymer is melted. The cellular structure in the polymer matrix reduces density and the relative permittivity of the foamable polyolefin composition.

One embodiment of the invention relates to a process for extruding the foamable polyolefin polymer composition according to any previous embodiment wherein the polymer melt has an extrusion temperature of 200 to 260°C. Citric acid or a derivate of citric acid typically has higher decomposition temperatures compared to azodicarbonamide. The advantage of the invention is a higher process window f, i.e. between melting temperature of the foamable polyolefin polymer and the decomposition temperature of the blowing agent.

A broad processing window is of importance for the production of a compounded foamable polyolefin polymer composition comprising the chemical blowing agent. During the compounding process the target is to obtain a good mixing without reacting the blowing agent as that would result in a lowered foaming capability during extrusion of the foamed cable layer, such as insulation layer. An expanded production window allows for more flexibility in process settings during the compounding and reduces the amount of scrap material containing pre-reacted blowing agent.

The invention also relates to the use of a blowing agent which comprises more than 90 wt% of citric acid or derivate of citric acid and is free from hydrazine, hydrazide, or azodicarbonamide, for the production of a cable comprising at least one layer which comprises a foamable polyolefin polymer composition comprising at least 90 wt% of polyolefins.

**The invention in detail**

The invention relates to the foamable polyolefin polymer composition comprising a blowing agent, which is free from hydrazine, hydrazide, or azodicarbonamide. In a more suitable embodiment the blowing agent is also free from bicarbonates, such a sodium bicarbonate.

In a further embodiment of the invention the foamable polyolefin polymer composition is extruded, suitably on a cable extruder wherein the at least one layer which comprises the foamable polyolefin polymer composition is extruded, suitably in a cable extruder.

In one embodiment of the invention the blowing agent comprises more than 90 wt% of citric acid or a derivate of citric acid, suitably more than 95 wt%, or most suitably the blowing agent consist of citric acid or a derivate of citric acid. The advantage of only "one" blowing agent is even better control of foaming process as only one decomposition temperature interval has to be taken into account during processing which reduces the complexity of the process.

In one embodiment of the invention the foamable polyolefin polymer composition comprises
c. A nucleating agent.

The nucleating agent is suitably a mineral nucleating agent.

The mineral nucleating agent is typically a mineral with high surface area. The interface between the mineral nucleating agent and the polyolefin polymer melt will serve as nucleating sites for bubble formation during the foaming process as the energy required for bubble formation is lower in this interface than in the bulk polymer melt. The mineral nucleating agent can be any mineral filler, for example silica, talc, calcium carbonate, kaolin, dolomite, zeolites, mica, wollastonite or clay mineral.

The foamable polyolefin polymer composition suitably has $MFR_5$ measured at 140°C of 0.3 to 20 g/10min, suitably 0.5 to 10 g/10min. This MFR range is preferred from a processing perspective as a lower $MFR_5$ polymer composition would be very viscous and difficult to foam. Too high MFR materials are not preferred as the melt strength of the polymer composition decreases with increasing MFR and a good melt strength is of importance for the foaming process.

Polyethylene density is normally used for classification of different types of polyethylene - HDPE, MDPE, LLDPE, LDPE, VLDPE and ULDPE. The density of polyethylene is directly related to the crystallinity of the material, and thus the melting point as the melting point is essentially determined by the lamellar thickness of the crystalline fraction. Pure linear PE with high crystallinity has a density of typically of 960 to 970 kg/m³, i.e. about 965 kg/m³ and melting point of typically of 125 to 135°C, i.e. around 130°C. With decreasing polyethylene density the melting point is lowered. For highly branched low density polyethylene the melting point is typically of 105 to 115°C, i.e. about 110°C as the crystallinity is disturbed by the long and short chain branching in the LDPE chain structure.

In one embodiment the foamable polyolefin polymer composition comprises at least an LDPE.

In order to foam a polyolefin polymer composition it is necessary that the polyolefin polymer composition has a good melt strength as too poor melt strength results in a collapsed cell structure which is not good for either mechanical or electrical properties of the cable layer, typically insulation layer. The melt strength can be improved by blending in a LDPE in the foamable polyolefin polymer composition in order to improve the melt strength and to ensure a foamed layer with a closed cell structure and homogeneous cell distribution.

Suitably the LDPE has an $MFR_2$ of 0.1 to 15 g/10min, suitable 0.2 to 10 g/10min. The LDPE is suitable an LDPE homopolymer, meaning that the LDPE comprise at least 97 wt% ethylene monomer or more suitably at least 99 wt% of ethylene monomers. A homopolymer is preferred as the main reason for adding LDPE to the blend is to improve melt strength and this property arises from the long chain branched structure of LDPE and is independent of comonomers.

The low density polyethylene (LDPE) polymer is polymerised in a high pressure radical polymerisation process, and is for example a copolymer of ethylene with one or more comonomer(s). Further, the LDPE is polymerised in a high pressure polymerisation process in the presence of an initiator(s) and optionally chain transfer agents to control the $MFR_2$.

The LDPE can be produced in for example a tubular polymerisation reactor, or in an autoclave polymerisation reactor, suitably a tubular polymerisation reactor.

Further the foamable polyolefin polymer composition may comprise at least a high density polyethylene (HDPE). Suitable the HDPE has a density 930 to 965 kg/m3. Suitable has the HDPE an $MFR_2$ of 0.1 to 20 g/10min, more suitable 0.5 to 15 g/10min. The HDPE is suitable a HDPE homopolymer, meaning that the HDPE comprise at least 90 wt% ethylene monomer or more suitably at least 95 wt% of ethylene monomer.

For foamed polyethylene used in communication cables, both electrical and mechanical properties are important. HDPE has a lower dielectric constant and lower loss factor than LDPE as well as higher strength and hardness.

The high density polyethylene (HDPE) polymer is polymerised in low pressure process, and is, for example, an optionally HDPE homopolymer or an optionally HDPE copolymer of ethylene with one or more comonomer(s). Further, the HDPE is polymerised in a low pressure polymerisation process in the presence of a catalyst. The catalyst can be for example a Phillips catalyst, a metallocene catalyst or a Ziegler-Natta catalyst. The polymerisation can be for example either gas phase polymerisation, slurry polymerisation or a combination of slurry polymerisation/gas-phase polymerisation or gas-phase polymerisation/gas-phase polymerisation. The polymerisation can also be solution polymerisation. The polymerisation can be performed in one reactor or in several reactors in series, resulting in uni-, bi- or multimodal polyethylene. By the "modality" of a polymer is meant the structure of the molecular weight distribution of the polymer, i.e. the appearance of the curve indicating the number of molecules as a function of the molecular weight. If the curve exhibits one maximum, the polymer is referred to as "unimodal", whereas if the curve exhibits a very broad maximum or two or more maxima and the polymer consists of two or more fractions, the polymer is referred to as "bimodal", "multimodal" etc. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In the production of unimodal polyethylene, an ethylene polymer is produced in a reactor under certain conditions with respect to monomer composition, hydrogen gas pressure, temperature, pressure, and so forth. As comonomer, use is commonly made of other olefins having up to 12 carbon atoms, such as $\alpha$-olefins having 3-12 carbon atoms, e.g. propene, butene, 4-methyl-1-pentene, hexene, octene, decene, etc., in the copolymerisation of ethylene.

In the production of, say, a bimodal polyethylene, a first ethylene polymer is produced in a first reactor under certain conditions with respect to monomer composition, hydrogen gas pressure, temperature, pressure, and so forth. After the polymerisation in the first reactor, the reaction mixture including the polymer produced is fed to a second reactor, where further polymerisation takes place under other conditions. Usually, a first polymer of high melt flow rate (low molecular weight) and with a moderate or small addition of comonomer, or no such addition at all, is produced in the first reactor, whereas a second polymer of low melt flow rate (high molecular weight) and with a greater addition of comonomer is produced in the second reactor. As comonomer, use is commonly made of other olefins having up to 12 carbon atoms, such as $\alpha$-olefins having 3-12 carbon atoms, e.g. propene, butene, 4-methyl-1-pentene, hexene, octene, decene, etc., in the copolymerisation of ethylene. The resulting end product consists of an intimate mixture of the polymers from the two reactors, the different molecular weight distribution curves of these polymers together forming a molecular weight distribution curve having a broad maximum or two maxima, i.e. the end product is a bimodal polymer mixture.

The foamable polymer composition may be a blend of at least one HDPE and at least one LDPE.

In one embodiment of the invention the foamable polyolefin polymer composition comprises 5 to 80 wt of the LDPE and 20 to 95 wt% of HDPE, suitably 10 to 65 wt% of LDPE and 35 to 90 wt% of HDPE, and more suitably 15 to 50 wt% of LDPE and 50 to 85 wt% of HDPE. Suitably all the polymers in the foamable polyolefin polymer composition only comprise polyethylene.

The amount of blowing agent master batch is suitably from 0.1 to 10 wt% of the polyolefin polymer composition, more suitable 0.2 to 7 wt%, most suitably 0.3 to 5 wt%.

Compounding the blowing agent master batch into the polyolefin polymer compositions results in better distribution of the blowing agent and possible nucleating agent compared to dry mixing with the foamable polyolefin composition prior to extrusion or directly adding the blowing agent master batch into the extruder hopper. This contributes to more evenly distributed cells and more even cell size in the final product, which is a requirement for good communication cables.

The amount of stabilizers is from 0.01 wt% to 10 wt% of the foamable polyolefin polymer composition. Stabilizers are antioxidants, metal stabilizers and metal deactivators. The amount of stabilizers is suitably from 0.2 wt% to 5 wt% of the polyolefin polymer composition, more suitably 0.4 to 2 wt%.

The metal deactivator can be for example N,N'-bis (3(3',5'-di-tert. butyl-4'-hydroxyphenyl)propionyl) hydrazine, 2,2'-oxamido bis-(ethyl-3-(3,5-di-tert. butyl-4-hydroxyphenyl)propionate), oxalyl bis(benzylidenehydrazide), 2,5-bis(2-(3-(3,5-di-tert. butyl-4-hydroxyphenyl) propionylamido) ethylamino) benzoquinone, 2-tert. butyl-4-thio(2'-methyl-4'-hydroxy-5'-tert. butyl)phenyl-5-methyl) phenylphosphite, 3- (N-salicyloyl) amino-1,2,4-triazole, decamethylene-dicarboxy-di-salicyloyl hydrazide, benzotriazole, N,N-bis(2-ethylhexyl)-4-methyl-1H-benzotriazole-1-methanamine, N,N-bis(2-ethylhexyl)-5-methyl-1H-benzotriazole-1-methanamine or phthalic anhydride. The metal deactivator can also be a combination of more than one metal deactivator.

The foamable polyolefin polymer composition comprising a chemical blowing agent, and may contain additives such as lubricants and acid scavengers.

In one embodiment of the invention the foamable polyolefin polymer composition is foamed. The foaming degree is suitably 30 to 90 %, more suitably 35 to 80%.

The invention also relates to an insulation layer in the cable comprising the foamable polyolefin polymer composition. Suitably is the insulation layer in a communication cable. More suitable is the communication cable a coax cable or a data cable, most suitable a data cable. The cable suitably comprises a conductor, suitable a copper conductor, in which the foamable polyolefin polymer composition comprises a metal stabiliser. The typical thickness of an insulation layer is from 0.01 to 50 mm for coax or data cables and suitably 0.1 to 1 mm for data cable. In a more suitable embodiment is the insulation layer comprising the foamable polyolefin polymer composition in direct contact with a copper conductor and the foamable polyolefin polymer composition comprises a metal deactivator and suitably one or more antioxidants.

The invention also relates to a process for extruding the foamable polyolefin polymer composition according to any previous claim wherein the polyolefin polymer melt has an extrusion temperature of 200 to 260°C, suitably 210 to 250°C, more suitable 220 to 240°C.

The advantage is complete decomposition of the blowing agent and that the foamable polyolefin polymer composition is completely molten. In a suitable embodiment is the the foamable polyolefin polymer composition only comprising polyethylene according to the embodiments above such as LDPE and HDPE.

### Test methods

### MFR

The melt flow rate $MFR_2$ was measured in accordance with ISO 1133 at 190°C and a load of 2.16 kg. The melt flow rate $MFR_5$ was measured in accordance with ISO 1133 at 140°C and a load of 5 kg.

### Density

The method for determining density is following ISO 17872-2 for sample preparation and ISO 1183-1 / method A for the density measurement.

### Foam extrusion

Foaming of the insulation was monitored online by a Zumbach process computer with Cellmaster software (7K7E2035b). The computer gets capacitance, line speed, telesingle outer diameter and temperature in extruder heating zone 4 as online inputs. Density and dielectric constant of the solid polymer material and the diameter of conductor are fed in as input into the process computer. The computer control system uses the online measurements of capacitance and outer diameter together with the input conductor diameter and polymer dielectric constant to calculate expansion. The system can be run manually, where an operator adjusts the line as wished, and the process computer is used to read and log the data. It can also be run in automatic controller mode where the computer process control system steers the expansion (i.e. capacitance) towards defined set points. If the process control system is running in automatic controller mode, it primarily steers the water bath position and secondarily the line speed.

**Dielectric Properties (Dielectric loss tangent value (tan $\delta$)):**

1. Preparation of the plaques:

Polymer compounds have been compression moulded at 140°C in a frame to yield plates of 4 mm thickness, 80 mm width and 80 mm length. The pressure has been adjusted high enough to obtain a smooth surface of the plates. A visual inspection of the plates showed no inclusions such as trapped air or any other visible contamination.

2. Characterization of the plaques for dielectric properties:

For the measurement of the dielectric constant and the tangent delta (tan $\delta$) of the materials, a split-post dielectric resonator has been used together with a network analyser (Rohde and Schwarz ZVL6). The technique measures the complex permittivity of dielectric laminar specimen (plaques) in the frequency range from 1 - 10 GHz. The test is conducted at 23 °C.

The split-post dielectric resonator (SPDR) was developed by Krupka and his collaborators [see: J Krupka, R G Geyer, J Baker-Jarvis and J Ceremuga, 'Measurements of the complex permittivity of microwave circuit board substrates using a split dielectric resonator and re-entrant cavity techniques', Proceedings of the Conference on Dielectric Materials, Measurements and Applications - DMMA '96, Bath, UK, published by the IEE, London, 1996.] and is one of the easiest and most convenient techniques to use for measuring microwave dielectric properties.

Two identical dielectric resonators are placed coaxially along the z-axis so that there is a small laminar gap between them into which the specimen can be placed to be measured. By choosing suitable dielectric materials the resonant frequency and Q-factor of the SPDR can be made to be temperature stable. Once a resonator is fully characterized, only three parameters need to be measured to determine the complex permittivity of the specimen: its thickness and the changes in resonant frequency, $\Delta f$, and in the Q-factor, $\Delta Q$, obtained when it is placed in the resonator.

Specimens of 4 mm thickness have been prepared by compression moulding as described above and measured at a high frequency of 1.9 GHz.

A comprehensive review of the method is found in J Krupka, R N Clarke, O C Rochard and A P Gregory, 'Split-Post Dielectric Resonator technique for precise measurements of laminar dielectric specimens - measurement uncertainties', Proceedings of the XIII Int. Conference MIKON'2000, Wroclaw, Poland, pp 305 - 308, 2000.

**Materials**

**HDPE:** A unimodal HDPE material produced with a Phillips catalyst with density 946 kg/m$^3$ and MFR$_2$ (2.16 kg and 190°C) of 0.95 g/10 min.

**LDPE:** A tubular homopolymer LDPE with density 923 kg/m$^3$ and MFR$_2$ (2.16 kg and 190°C) of 0.75 g/10 min. This grade is available commercially from Borealis AG under the grade name FT5230.

**HE1345:** A high density polyethylene compound commercially available from Borealis AG for chemical foamed telesingles. It contains the blowing agent azodicarbonamide activated with silica. The MFR$_5$ (5 kg and 140°C) of this grade is 1.1 g/10 min.

**Tracel® PO 4207:** An endothermic blowing agent masterbatch commercially available from Tramaco GmbH containing a mixture of the blowing agents sodium bicarbonate and derivate of citric acid and in which the amount of derivate of citric acid is less than 75 wt% of the added blowing agents. The masterbatch further comprise a nucleating agent comprising a mineral nucleating agent.

**Tracel® PO 2217:** An endothermic blowing agent masterbatch commercially available from Tramaco GmbH containing a derivate of citric acid and in which the amount of the derivate of citric acid is 100 wt % of the added blowing agents. The masterbatch further comprise a nucleating agent comprising a mineral nucleating agent.

**Pentaerythrityl-tetrakis(3-(3',5'-di-tert. butyl-4-hydroxyphenyl)-propionate:** Antioxidant commercially available from BASF GmbH under the grade name Irganox 1010 (CAS-no: 6683-19-8).

**N,N'-bis(3(3'5'-di-tert. butyl-4'-hydroxyphenyl)propionyl) hydrazine:** Metal deactivator commercially available from BASF GmbH under the grade name Irganox MD 1024 (CAS-no: 32687-78-8).

**Preparation of examples**

**Mixing of materials**

Inventive blend 1 was prepared by mixing in a Farrel F270 which is a Banbury type of mixer. Sets of 185 kg were in the mixer for 2-3 minutes until melt temperature reached about 155°C. The specific energy input during mixing was 155-165 kWh/ton and the mixing rotors were cooled to 30°C. Ram pressure was limited to 5 bar and the ram was lifted two times during the mixing process, once after 45 seconds of mixing and a second time after 90 seconds. The material was after the mixing process dropped into a 15-inch extruder from Pomini Farrel with neutral heating zones and 25°C screw cooling. After leaving the extruder die the material was cut into pellet shape with pellet water temperature 50°C and pellet knife speed 1200 rpm.

Comparative blend 2 was produced the same way with the exception that SEI was 143 kWh/ton, the ram pressure limitation was 4 bar and the ram was lifted three times during the mixing process: after 35, 90 and 120 seconds.

**Telesingle extrusion**

Polymer pellets of the blend materials in Table 1 were used to prepare telesingle samples, as shown in Table 2, on a pilot cable line with a Nokia-Maillefer 60 mm extruder. Extruder barrel has five temperature zones and the extruder head has three zones. The extruder screw was a barrier screw of the design Elise from Maillefer. The die size was 0.94 mm and the outer diameter of the telesingle samples in the examples was manually kept at 0.98 mm. The solid copper conductor diameter was 0.50 mm. Line speed was 500 m/min. Density of the solid material is 945 kg/m$^3$ and the dielectric constant is 2.33. Foaming of the insulation was monitored online using a standard Zumbach CDR process control system with online measurements of capacitance and telesingle outer diameter. Table 2 gives an overview of the examples produced in the extrusion process described above.

**Microscopy analysis of insulation cross sections**

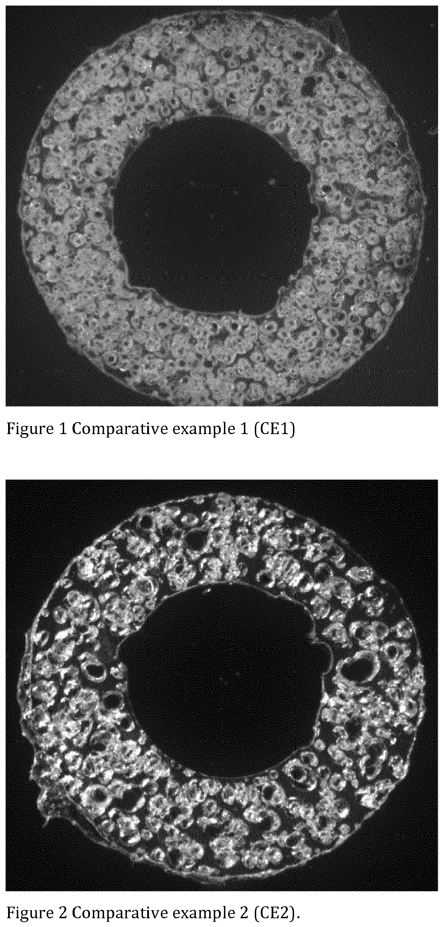

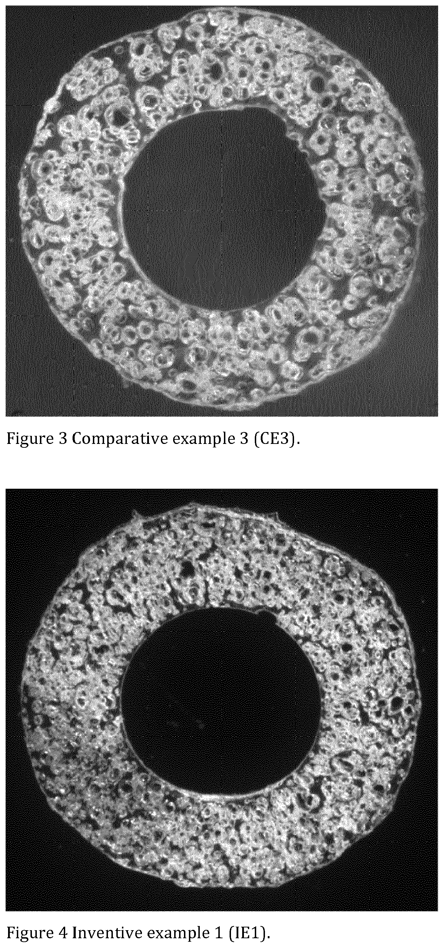

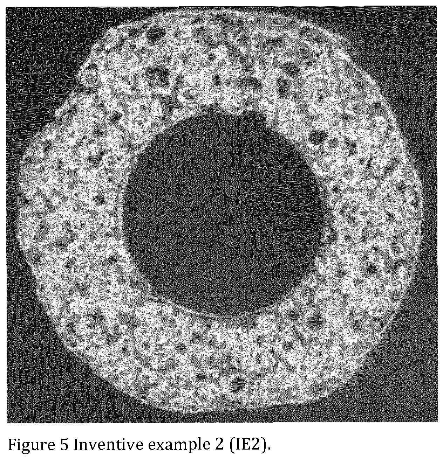

The cell structures in the insulation of the examples in Table 2 were examined by microscopy on thin slices of the insulation cross sections. Samples for the microscopy were prepared by first removing the conductor by taking about 0.5-1 m of the extruded telesingle sample and peeling off the insulation from the outermost ends of the cable length in order to expose the conductor. The bare conductor on one end of the telesingle sample was mounted in a vice and the bare conductor on the other end was stretched using a pair of pincers. Stretching the conductor causes the insulation to loosen from the conductor making it easy to pull out the conductor without damaging the insulation. A small section was taken from the middle of the tubular insulation length and put into a cable cutting instrument in which about 60 µm thin slices of insulation were cut out and placed between two microscope slides. The cell structure in the insulation cross sections were then studied in a microscope (Leica M205 C, Leica Microsystems) and micrograph pictures were taken using a digital microscope camera (Leica DFC450, Leica Microsystems). Micrographs of the insulation cross sections of the examples can be found in Figure 1(CE1), Figure 2 (CE2), Figure 3 (CE3), Figure 4 (IE1) and Figure 5 (IE2). Five cuts were examined from each telesingle sample. The cell structure normally looks very similar in all five micrographs from the same sample and only one micrograph per sample has been selected to be presented in this patent application. In case there would be large deviations between the five micrographs from the same sample it is recommended to prepare new microscopy samples and repeat the microscopy analysis.

**Examples**

Table 1 Blends used in the examples

| Material | HE1345 Comparative | Comparative blend 2 | Inventive blend 1 |
|---|---|---|---|
| | [wt %] | [wt %] | [wt %] |
| HE1345 | 100 | | |
| HDPE | | 82.2 | 82.2 |
| LDPE | | 14.8 | 13.4 |
| Pentaerythrityltetrakis(3-(3',5'-di-tert. Butyl-4-hydroxyphenyl)-propionate | | 0.34 | 0.34 |
| N,N'-bis(3(3'5'-di-tert. Butyl-4'-hydroxyphenyl) propionyl) hydrazine | | 0.56 | 0.56 |
| Tracel PO 4207 | | 2.1 | |

(continued)

| Material | HE1345 Comparative | Comparative blend 2 | Inventive blend 1 |
|---|---|---|---|
|  | [wt %] | [wt %] | [wt %] |
| Tracel PO 2217 |  |  | 3.5 |
| MFR$_5$ measured at 140°C | 1.1 | 1.0 | 1.0 |

Table 2, Examples prepared from blends in Table 1.

| Example | Insulation material | Insulation expansion (%) | Temperature profile Z1/Z2/Z3/Z4/Z5//H1/H2/H3 (°C) |
|---|---|---|---|
| CE1 | HE1345 Comparative | 39 | 153/174/189/198/198//198/198/198 |
| CE2 | Comparative blend 2 | 41 | 153/174/187/217/215//200/200/200 |
| CE3 | Comparative blend 2 | 39 | 153/174/205/220/198//195/195/195 |
| IE1 | Inventive blend 1 | 41 | 153/174/187/230/200//198/198/198 |
| IE2 | Inventive blend 1 | 41 | 153/174/210/233/198//195/195/195 |

Each insulation material gives approximately the same expansion degree. Surprisingly the IE1 and IE2 give more evenly distributed and finer cell structure that CE2 and CE3. Furthermore, IE1 and IE2 give cell structure which is comparable to that of CE1.

The electrical loss factor has been measure on HE1345 Comparative and Inventive blend 1. Both materials were compression moulded under foaming temperature (140°C) and converted into non foamed plaques. Those plaques were submitted to loss factor measurement at 1.9 GHz (tan $\delta$).

Table 3, Electrical properties before foaming.

| Insulation material | Loss factor (1x10-6)@ 1.9 GHz |
|---|---|
| HE1345 Comparative | 412 |
| Inventive blend 1 | 346 |

Inventive blend 1 provides lower loss factor values compared to the HE1345 comparative before foaming, which means that this initial lower loss factor before foaming reflects a better electrical properties of the base resins contained in the inventive composition. Therefore this is a good starting point for achieving higher data transmission once the cable is foamed.

**Claims**

1.   A cable comprising at least one layer which comprises a foamable polyolefin polymer composition comprising a

   a. a polyolefin polymer
   b. a blowing agent

   wherein the blowing agent comprises more than 90 wt% of citric acid or derivate of citric acid and the composition comprises at least 90 wt% of polyolefins.

2.   The cable according to claim 1 wherein the blowing agent is free from hydrazine, hydrazide, or azodicarbonamide.

3.   The cable according to claim 1 or 2 wherein the foamable polyolefin polymer composition further comprises
   c. A nucleating agent.

**4.** The cable according to claim 3 wherein the nucleating agent comprises a mineral nucleating agent.

**5.** The cable according to any previous claim wherein the foamable polyolefin polymer composition comprises at least an LDPE.

**6.** The cable according to any previous claim wherein the foamable polyolefin polymer composition comprises at least an HDPE.

**7.** The cable according to claim 5 and 6 wherein the foamable polyolefin polymer composition comprises 5 to 80 wt% of the LDPE and 20 to 95 wt% of HDPE.

**8.** The cable according to any previous claim wherein the amount of blowing agent master batch is from 0.1 wt% to 10 wt% of the foamable polyolefin polymer composition.

**9.** The cable according to any previous claim wherein the foamable polyolefin polymer composition further comprises one or more stabilizers in an amount from 0.01 wt% to 10 wt% of the foamable polyolefin polymer composition.

**10.** The cable according to any previous claim wherein the foamable polyolefin polymer composition is foamed.

**11.** The cable according to any previous claim wherein the layer is an insulation layer.

**12.** The cable according to claim 11 wherein the cable is a communication cable.

**13.** The cable according to claim 12 wherein the cable is a data communication cable.

**14.** Process for extruding the foamable polyolefin polymer composition according to any previous claim wherein the polymer melt has an extrusion temperature of 200 to 260°C.

**15.** The use of a blowing agent which comprises more than 90 wt% of citric acid or derivate of citric acid and is free from hydrazine, hydrazide, or azodicarbonamide, for the production of a cable comprising at least one layer which comprises a foamable polyolefin polymer composition comprising at least 90 wt% of polyolefins.


**Patentansprüche**

**1.** Kabel, umfassend mindestens eine Schicht, die eine schäumbare Polyolefin-Polymer-Zusammensetzung umfasst, umfassend ein

    a. ein Polyolefin-Polymer
    b. ein Treibmittel

wobei das Treibmittel mehr als 90 Gew.-% Zitronensäure oder ein Derivat von Zitronensäure umfasst und die Zusammensetzung mindestens 90 Gew.-% Polyolefine umfasst.

**2.** Kabel nach Anspruch 1, wobei das Treibmittel frei von Hydrazin, Hydrazid oder Azodicarbonamid ist.

**3.** Kabel nach Anspruch 1 oder 2, wobei die schäumbare Polyolefin-Polymer-Zusammensetzung weiterhin
c. ein Nukleierungsmittel umfasst.

**4.** Kabel nach Anspruch 3, wobei das Nukleierungsmittel ein mineralisches Nukleierungsmittel umfasst.

**5.** Kabel nach einem vorangehenden Anspruch, wobei die schäumbare Polyolefin-Polymer-Zusammensetzung mindestens ein LDPE umfasst.

**6.** Kabel nach einem vorangehenden Anspruch, wobei die schäumbare Polyolefin-Polymer-Zusammensetzung mindestens ein HDPE umfasst.

**7.** Kabel nach Anspruch 5 und 6, wobei die schäumbare Polyolefin-Polymer-Zusammensetzung 5 bis 80 Gew.-%

LDPE und 20 bis 95 Gew.-% HDPE umfasst.

**8.** Kabel nach einem vorangehenden Anspruch, wobei die Menge an Treibmittel-Masterbatch 0,1 Gew.-% bis 10 Gew.-% der schäumbaren Polyolefin-Polymer-Zusammensetzung beträgt.

**9.** Kabel nach einem vorangehenden Anspruch, wobei die schäumbare Polyolefin-Polymer-Zusammensetzung weiterhin einen oder mehrere Stabilisatoren in einer Menge von 0,01 Gew.-% bis 10 Gew.-% der schäumbaren Polyolefin-Polymer-Zusammensetzung umfasst.

**10.** Kabel nach einem vorangehenden Anspruch, wobei die schäumbare Polyolefin-Polymer-Zusammensetzung geschäumt ist.

**11.** Kabel nach einem vorangehenden Anspruch, wobei die Schicht eine Isolationsschicht ist.

**12.** Kabel nach Anspruch 11, wobei das Kabel ein Kommunikationskabel ist.

**13.** Kabel nach Anspruch 12, wobei das Kabel ein Datenkommunikationskabel ist.

**14.** Verfahren zum Extrudieren der schäumbaren Polyolefin-Polymer-Zusammensetzung nach einem vorangehenden Anspruch, wobei die Polymerschmelze eine Extrusionstemperatur von 200 bis 260°C aufweist.

**15.** Verwendung eines Treibmittels, das mehr als 90 Gew.-% Zitronensäure oder ein Derivat von Zitronensäure umfasst und frei von Hydrazin, Hydrazid oder Azodicarbonamid ist, zur Herstellung eines Kabels, das mindestens eine Schicht umfasst, die eine schäumbare Polyolefin-Polymer-Zusammensetzung umfasst, die mindestens 90 Gew.-% Polyolefine umfasst.

**Revendications**

**1.** Câble comprenant au moins une couche qui comprend une composition de polymère de polyoléfine moussable comprenant

    a. un polymère de polyoléfine,
    b. un agent gonflant,

dans lequel l'agent gonflant comprend plus de 90 % en poids d'acide citrique ou de dérivé d'acide citrique, et la composition comprend au moins 90 % en poids de polyoléfines.

**2.** Câble selon la revendication 1, dans lequel l'agent gonflant est exempt d'hydrazine, d'hydrazide, ou d'azodicarbonamide.

**3.** Câble selon la revendication 1 ou 2, dans lequel la composition de polymère de polyoléfine moussable comprend en outre
c. un agent de nucléation.

**4.** Câble selon la revendication 3, dans lequel l'agent de nucléation comprend un agent de nucléation minéral.

**5.** Câble selon l'une quelconque des revendications précédentes, dans lequel la composition de polymère de polyoléfine moussable comprend au moins un LDPE.

**6.** Câble selon l'une quelconque des revendications précédentes, dans lequel la composition de polymère de polyoléfine moussable comprend au moins un HDPE.

**7.** Câble selon les revendications 5 et 6, dans lequel la composition de polymère de polyoléfine moussable comprend 5 à 80 % en poids du LDPE et 20 à 95 % en poids de HDPE.

**8.** Câble selon l'une quelconque des revendications précédentes, dans lequel le mélange maître d'agent gonflant représente de 0,1 % en poids à 10 % en poids de la composition de polymère de polyoléfine moussable.

**9.** Câble selon l'une quelconque des revendications précédentes, dans lequel la composition de polymère de polyoléfine moussable comprend en outre un ou plusieurs stabilisants en une quantité de 0,01 % en poids à 10 % en poids de la composition de polymère de polyoléfine moussable.

**10.** Câble selon l'une quelconque des revendications précédentes, dans lequel la composition de polymère de polyoléfine moussable est expansée.

**11.** Câble selon l'une quelconque des revendications précédentes, dans lequel la couche est une couche d'isolation.

**12.** Câble selon la revendication 12, dans lequel le câble est un câble de communication.

**13.** Câble selon la revendication 12, dans lequel le câble est un câble de communication de données.

**14.** Procédé pour extruder la composition de polymère de polyoléfine moussable selon l'une quelconque des revendications précédentes, dans lequel la masse fondue de polymère a une température d'extrusion de 200 à 260°C.

**15.** Utilisation d'un agent gonflant qui comprend plus de 90 % en poids d'acide citrique ou de dérivé d'acide citrique et qui est exempt d'hydrazine, d'hydrazide ou d'azodicarbonamide, pour la production d'un câble comprenant au moins une couche qui comprend une composition de polymère de polyoléfine moussable comprenant au moins 90 % en poids de polyoléfines.

Figure 1 Comparative example 1 (CE1)

Figure 2 Comparative example 2 (CE2).

Figure 3 Comparative example 3 (CE3).

Figure 4 Inventive example 1 (IE1).

Figure 5 Inventive example 2 (IE2).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014018768 A

**Non-patent literature cited in the description**

- **HARTMAN et al.** *Ind. Eng. Chem. Res.,* 2013, vol. 52, 10619-10626
- Measurements of the complex permittivity of microwave circuit board substrates using a split dielectric resonator and re-entrant cavity techniques. **J KRUPKA ; R G GEYER ; J BAKER-JARVIS ; J CEREMUGA.** Proceedings of the Conference on Dielectric Materials, Measurements and Applications - DMMA '96. IEE, 1996
- **J KRUPKA ; R N CLARKE ; O C ROCHARD ; A P GREGORY.** Split-Post Dielectric Resonator technique for precise measurements of laminar dielectric specimens - measurement uncertainties. *Proceedings of the XIII Int. Conference MIKON'2000,* 2000, 305-308
- *CHEMICAL ABSTRACTS,* 6683-19-8
- *CHEMICAL ABSTRACTS,* 32687-78-8